# EUROPÄISCHE PATENTSCHRIFT

(11) **EP 2 829 752 B1**
(45) Veröffentlichungstag und Bekanntmachung des Hinweises auf die Patenterteilung: **06.09.2017**
(21) Anmeldenummer: 14178177.3
(22) Anmeldetag: 23.07.2014
(51) Int. Cl.: F16C 32/06

(54) **Aerostatisches Lager**
Aerostatic bearing
Palier aérostatique

(30) Priorität: 24.07.2013 DE 102013107928
(43) Veröffentlichungstag der Anmeldung: 28.01.2015
(73) Patentinhaber: ess-micromechanik GmbH, 78333 Stockach-Windegg (DE)
(72) Erfinder: Schwarz, Werner, 78567 Friedingen (DE); Schurer, Robert, 88639 Sentenhart (DE)
(74) Vertreter: Patentanwälte und Rechtsanwalt Weiß, Arat & Partner mbB

(56) Entgegenhaltungen:
- EP-A1- 2 774 686
- WO-A1-01/71207
- WO-A2-2013/103732
- CN-A- 103 016 528
- CN-U- 203 051 488
- DE-C- 951 324
- DE-U1- 8 132 123
- US-A- 3 013 845
- US-A- 3 721 479
- US-A- 3 827 767
- US-A- 4 410 220
- US-A- 5 110 520

## Beschreibung

### Technisches Gebiet

Die Erfindung betrifft ein aerostatisches Lager nach dem Oberbegriff des Anspruchs 1.

### Stand der Technik

Aus dem Stand der Technik sind verschiedene aerostatische Gaslager und Luftlager bekannt. Aerostatische Lager gehören zur Klasse der Gleitlager und kommen unter anderem im Instrumenten- und Apparatebau und in der pharmazeutischen, nahrungs- oder genussmittelverarbeitenden Industrie zum Einsatz.

Bei aerostatischen Lagern wird z.B. Druckluft in den Lagerspalt zwischen die sich zueinander bewegenden Gleitflächen gepresst. Somit bildet das eingepresste Gas das Schmiermedium. Durch das Gaspolster im Lagerspalt wird zudem ein Berühren der Gleitflächen miteinander verhindert. Aerostatische Lager werden z.B. in Linearführungen eingesetzt. Ein solches Luftlager für eine Linearführung ist bspw. in der DE 195 33 690 A1 dargestellt.

Weiterhin werden aerostatische Lager auch als Rotationslager eingesetzt. Eine Ausführungsform eines solchen aerostatischen Lagers ist bspw. in der DE 10 2008 017 714 B4 dargestellt, die ein Rotationsluftlager für einen Rotor mit verschiedenen Aussendurchmessern und einem als Gasdrucklager ausgebildeten Radiallager zeigt. Das gezeigte Radiallager weist dabei zwei in Axialrichtung voneinander beabstandete Radiallagerabschnitte auf, die jeweils mit Druckgas beaufschlagt werden. Weiterhin weist dieses Lager einen Druckraum zur Erzeugung einer axialen Stützkraft auf.

In anderen Ausführungsformen weisen aerostatische Radiallager eine Vielzahl von Bohrungen auf, die für die Versorgung des Lagerspalts mit Druckgas genutzt werden. Die aerostatischen Lager weisen auf Grund der Vielzahl an Bohrungen meist eine Vielzahl an Todräumen auf, die die Lagereigenschaften negativ beeinflussen.

Weiterhin zeigt die DE 951 324 C ein Druckpolsterlager mit einer Vielzahl an Druckkammern zur Bildung von Luftpolstern. Die einzelnen Druckkammern werden über Bohrungen im Stator, in welche Drosselstellen als Zapfen mit einem Loch eingepresst sind, mit dem Druckmedium versorgt. Nachteilig an diesem Lager ist neben der geringen Genauigkeit, der Aussendurchmesser der Welle ist etwa 1/100 mm bis 5/100 mm kleiner als der Durchmesser der Lagerbohrungen, das in den einzelnen Druckkammern leicht Todräume entstehen können, welche wiederum die Lagergenauigkeit und die Versorgung der Lagerfläche mit dem Druckmedium negativ beeinflussen.

Im vorgenannten Zusammenhang sind weiterhin folgende Druckschriften zu nennen, die jeweils poröses Material für den Aufbau des Gaslagers bzw. für die Verteilung der Gase vorsehen:
CN 103 016 528A; CN 203 051 488 U; WO 10/71207 A1; US 3 721 479 A; WO 2013/103732 A2; US 5 110 520 A; DE 8132123 U1 und EP 2 774 686 A1. Zudem ist es Aufgabe der Erfindung ein aerostatisches Lager bereitzustellen, welches variable Ausführungsformen ermöglicht und eine hohe Genauigkeit bei hohen Drehzahlen ermöglicht.

### Lösung der Aufgabe

Zur Lösung der Aufgabe führen die Merkmale nach dem Anspruch 1.

In einem typischen Ausführungsbeispiel weist ein aerostatisches Luft- und/oder Gaslager, welches im Folgenden vereinfacht als aerostatisches Lager bezeichnet wird, ein stationäres Bauteil, einen Stator, und ein rotierendes Bauteil, einen Rotor, auf. In den Stator des aerostatischen Rotationslager ist eine Ringnut eingebracht. Diese befindet sich im Bereich einer Lagerfläche zu dem Rotor hin. Zu der Ringnut im Stator führt zumindest eine Ausnehmung. Bei der Ausnehmung handelt es sich vorzugsweise um einen geschlossenen Kanal im Stator. Der Kanal besteht dabei vorzugsweise aus zumindest einer Bohrung. Die Ausnehmung im Stator ist dazu geeignet, die Ringnut und die Lagerfläche des aerostatischen Lagers mit durch Druck beaufschlagter Luft und/oder mit durch Druck beaufschlagtem Gas zu versorgen. In einem typischen Ausführungsbeispiel wird die Ringnut des aerostatischen Lagers über einen einzigen Kanal bzw. Zugang mit der durch Druck beaufschlagten Luft und/oder mit dem durch Druck beaufschlagten Gas versorgt.

Die Ringnut ist in einem typischen Ausführungsbeispiel umlaufend in den Stator eingebracht. Weiterhin ist die Ringnut dazu geeignet, einen Ringeinsatz aufzunehmen. Sowohl die Ringnut als auch der Ringeinsatz sind in ihrer Form variabel ausführbar. Dadurch kann je nach Anforderungsprofil an das aerostatische Lager die Grösse und Form variiert werden. Somit kann die Erzeugung eines Luft- und/oder Gaspolsters im Bereich des Lagerspalts zwischen dem Rotor und dem Stator über eine angepasste Ausformung der Ringnut und des Ringeinsatzes beeinflusst werden.

Nach dem Einbringen des Ringeinsatzes in die Ringnut bleibt ein Teil der Ringnut als Hohlraum bestehen. Über den Hohlraum, der von dem Stator und dem Ringeinsatz gebildet wird, wird die Ringnut und somit das aerostatische Lager umlaufend und gleichmässig mit der durch Druck beaufschlagten Luft und/oder mit dem durch Druck beaufschlagten Gas versorgt.

In einem typischen Ausführungsbeispiel ist der Ringeinsatz mit dem Stator stoffschlüssig verbunden. Vorzugsweise handelt es sich bei der stoffschlüssigen Verbindung zwischen dem Stator und dem Ringeinsatz um eine Schweissverbindung. Die Schweissverbindung wird in einem Ausführungsbeispiel über Laserstrahlschweissverfahren hergestellt. Weiterhin ist die stoffschlüssige Verbindung auch über andere Methoden, wie z.B. das Reibschweissverfahren oder das Elektronenstrahlschweissverfahren herstellbar.

In weiteren Ausführungsformen ist kann es sich bei der Verbindung zwischen dem Stator und dem Ringeinsatz um eine kraftschlüssige und/oder formschlüssige Verbindung handeln. Nur beispielhaft und nicht einschränkend sollen hier als andere Verbindungsarten Kleben, Schrauben oder Heissverstemmen genannt sein.

Um die mit Druck beaufschlagte Luft und/oder das mit Druck beaufschlagte Gas aus der Ringnut in die Lagerfläche zwischen dem Rotor und dem Stator zu leiten, weist der Ringeinsatz zumindest eine Ausnehmung auf. In einem Ausführungsbeispiel handelt es sich dabei um eine Vielzahl von Mikrodüsen, die z.B. durch Laserbohren in den Ringeinsatz eingebracht werden. In anderen Ausführungsformen handelt es sich bei der Ausnehmung z.B. um einen oder mehrere Schlitzauslässe oder eine Vielzahl von Düsen.

In einem weiteren Ausführungsbeispiel ist die Ausnehmung im Ringeinsatz dazu geeignet einen Einsatz aufzunehmen. Durch diesen Einsatz kann z.B. der Durchmesser der Ausnehmung variiert werden. Weiterhin weist der Einsatz in einer Ausführungsform auf der dem Lagerspalt zugewandten Seite eine Düsenkontur auf. Durch die Düsenkontur kann die Strömungsgeschwindigkeit der in den Lagerspalt strömenden Luft und/oder des in Lagerspalt strömenden Gases erhöht werden. Durch die Erhöhung der Strömungsgeschwindigkeit kann wiederum ein Zurückpuffern der Luft und/oder des Gases in die Ausnehmung und die Ringnut verhindert werden. Dadurch kann eine höhere Laufruhe und Genauigkeit des Lagers erreicht werden.

Um die Genauigkeit des aerostatischen Lagers weiterhin zu erhöhen, weist das aerostatische Lager in einem typischen Ausführungsbeispiel ein Aufgussteil auf. Durch das Aufgussteil kann die Genauigkeit der Abmessungen und der Kontur des Rotors übernommen werden. Das Aufgussteil ist bei einem Ausführungsbeispiel zwischen dem Rotor und dem Stator eingebracht. Durch diese Massnahmen können mit einem aerostatischen Lager Genauigkeiten von kleiner als 0,02 µm (20 nm) bei Drehzahlen von bis zu 100.000 min⁻¹ erreicht werden. In einem typischen Ausführungsbeispiel handelt es sich bei dem Aufgussteil um ein aus Kunststoff gefertigtes Bauteil.

In einem typischen Ausführungsbeispiel weist das Aufgussteil eine Ausnehmung auf. Die Position der Ausnehmung im Aufgussteil stimmt dabei mit der Position der Ausnehmung im Ringeinsatz überein. In einem Ausführungsbeispiel ist die Ausnehmung im Aufgussteil dazu geeignet, das zur Lagerfläche hin ragende Ende des Einsatzes, der sich in der Ausnehmung des Ringeinsatzes befindet, aufzunehmen. In einem anderen Ausführungsbeispiel weist die Ausnehmung im Aufgussteil eine Düsenform auf, wodurch auch in diesem Ausführungsbeispiel die zuvor beschriebenen Vorteile erreicht werden können.

Somit sind die Ausnehmung im Ringeinsatz und/oder die Ausnehmung im Aufgussteil und/oder der Einsatz für die Ausnehmung im Ringeinsatz und/oder eine beliebige Kombination dieser dazu geeignet, die mit Druck beaufschlagte Luft und/oder das mit Druck beaufschlagte Gas aus der Ringnut in die Lagerfläche zwischen dem Rotor und dem Aufgussteil bzw. die Lagerfläche zwischen dem Rotor und dem Stator zu leiten.

Durch die vorliegenden Ausführungsbeispiele ist es möglich, ein radiales und/oder axiales aerostatisches Lager auszugestalten. Auch ein aerostatisches Lager, welches als eine Kombination eines Axial- und Radiallagers wirkt, ist durch die vorliegende Erfindung möglich.

Durch die vorliegende Erfindung soll auch die Möglichkeit umfasst sein, dass in einem aerostatischen Lager für eine Linearführung ein ähnliches System genutzt werden kann. Bei einem solchen System soll dabei ebenfalls ein Einsatz genutzt werden, der in eine Nut eingebracht wird. Über die Ausnehmungen und/oder Düsen in dem Einsatz kann anschliessend das aerostatische Lager für eine Linearführung über vorzugsweise einen einzigen Druckgaszugang versorgt werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Figur 1: eine schematische Schnittdarstellung eines Ausführungsbeispieles eines erfindungsgemässen aerostatischen Lagers mit einem Ringeinsatz;
- Figur 2: eine vergrösserte Darstellung des Ausschnitts II aus Figur 1 des aerostatischen Lagers mit dem Ringeinsatz;
- Figur 3: einen Stator mit einem weiteren Ausführungsbeispiel eines Ringeinsatzes; und
- Figur 4: einen Stator mit einem weiteren Ausführungsbeispiel des Ringeinsatzes mit Schlitzdüsen.

### Ausführungsbeispiel

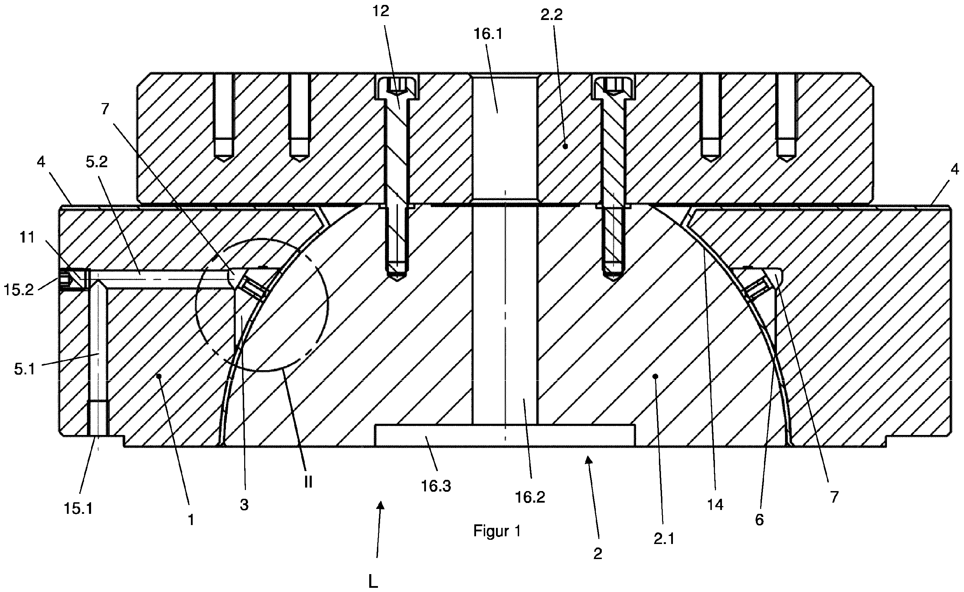

Figur 1 zeigt eine Schnittdarstellung eines Ausführungsbeispiel eines aerostatischen Lagers L, das einen Stator 1 und einen mehrteiligen Rotor 2.1 und 2.2 umfasst, welche zueinander über ein aerostatisches Lager L gelagert sind. Die einzelnen Rotorelemente 2.1 und 2.2 sind im gezeigten Ausführungsbeispiel durch Schrauben 12 miteinander verbunden. Im Folgenden wird der mehrteilige Rotor 2.1 und 2.2 nur als Rotor mit der Bezugsziffer 2 benannt.

Weiterhin weist der Rotor 2 im gezeigten Ausführungsbeispiel Ausnehmungen 16.1 bis 16.3 auf. Abhängig vom Anwendungsfall können die Ausnehmungen 16.1 bis 16.3 eine erhöhte Verkippungssteifigkeit bewirken. Dabei kann die Formgebung und die Anzahl der Ausnehmungen 16.1 bis 16.3 in dem Rotor 2 vom Fachmann weitgehend frei gestaltet und auf den jeweiligen Anwendungsfall des aerostatischen Lagers L angepasst werden.

Der Stator 1 weist im gezeigten Ausführungsbeispiel Ausnehmungen 5.1 und 5.2 auf, die in eine Ringnut 7 münden. Die Ringnut 7 im Stator 1 ist in einem typischen Ausführungsbeispiel umlaufend. Die Ausnehmungen 5.1 und 5.2 bilden einen Kanal, der geeignet ist, die Ringnut 7 und eine Lagerfläche 14 des aerostatischen Lagers L mit durch Druck beaufschlagter Luft und/oder mit durch Druck beaufschlagtem Gas zu versorgen.

Im folgenden wird vereinfacht der Begriff "Druckluft" für die mit Druck beaufschlagte Luft und/oder das mit Druck beaufschlagte Gas genutzt. Durch die vereinfachte Begriffswahl erfolgt keine Einschränkung auf Luft als Medium zur Versorgung des aerostatischen Lagers L.

Im dargestellten Ausführungsbeispiel sind die Ausnehmungen 5.1 und 5.2 Bohrungen. In einem typischen Ausführungsbeispiel wird die Ringnut 7 über einen einzigen Zugang mit der Druckluft versorgt. Bei diesem Zugang handelt es sich wie im gezeigten Ausführungsbeispiel vorzugsweise um den durch die Bohrungen/Ausnehmungen 5.1 und 5.2 gebildeten Kanal. Im gezeigten Ausführungsbeispiel besteht die Möglichkeit eines Abschlusses 15.1 und 15.2 für die Druckluftversorgung an zwei Stellen. Bei dem Anschluss 15.2 handelt es sich um das dem Rotor 2 abgewandte Ende der Ausnehmung 5.2 in der Figur 1 und bei dem Anschluss 15.1 um das der Ausnehmung 5.2 abgewandte Ende der Ausnehmung 5.1 in Figur 1. Die Druckluftversorgung des aerostatischen Lagers L kann z.B. über einen in den Figuren nicht dargestellten Kompressor erfolgen.

Im gezeigten Ausführungsbeispiel ist der Anschluss 15.2 der Ausnehmung 5.2 durch einen Verschluss 11 abgedichtet und verschlossen. Die Druckluftversorgung erfolgt über den Anschluss 15.1. Dadurch entstehen im gezeigten Beispiel in dem Kanal für die Druckluftversorgung des Ringraums 7 keinerlei Todräume. In einem anderen Ausführungsbeispiel kann die Druckluftversorgung auch am Anschluss 15.2 der Ausnehmung 5.2 erfolgen. In diesem Fall wird der Anschluss 15.1 der Ausnehmung 5.1 mit dem Verschluss 11 abgedichtet..

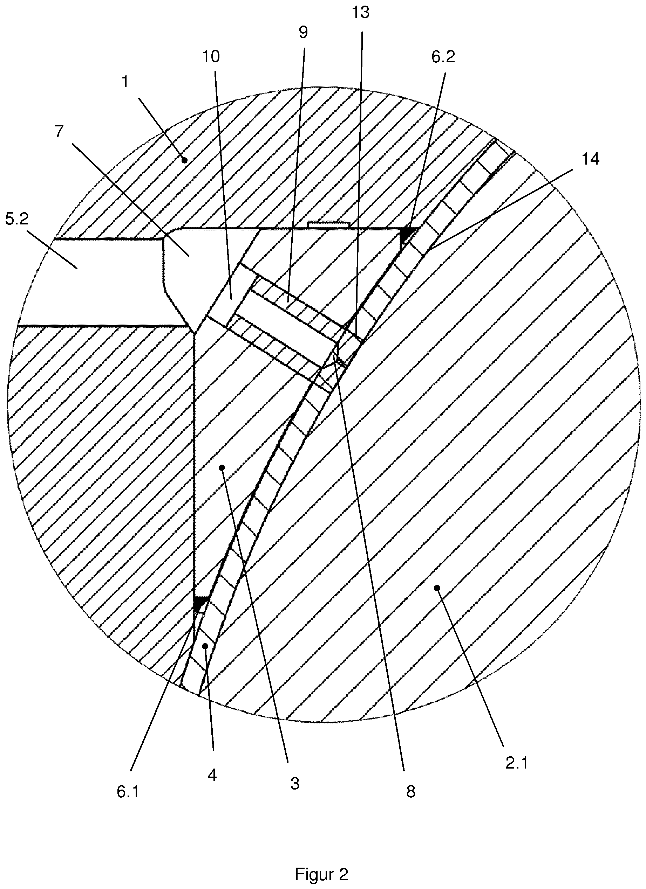

Weiterhin zeigt Figur 1 einen Ringeinsatz 3, der in die Ringnut 7 im Stator 1 eingebracht ist. Der Ringeinsatz 3 ist vorzugsweise über eine Schweissverbindung 6.1 und 6.2 mit dem Stator 1 verbunden. Eine Darstellung des Details II aus Figur 1, das den Ringeinsatz 3 sowie die Ringnut 7 und insbesondere die Schweissverbindung 6 vergrössert darstellt, wird in Figur 2 gezeigt.

Zudem ist in den Figuren 1 und 2 gezeigt, dass zwischen dem Rotor 2 und dem Stator 1 ein Aufgussteil 4 eingebracht ist. Durch das Aufgussteil 4 kann die Genauigkeit des Rotors 3 für das aerostatische Lager L übernommen werden. Dadurch kann eine Genauigkeit von kleiner 0,02 µm (20 nm) im gesamten Drehzahlenbereich des aerostatischen Lagers L erreicht werden.

In Figur 2 wird gezeigt, dass im gezeigten Ausführungsbeispiel zwischen dem Stator 1 und dem Ringeinsatz 3 eine stoffschlüssige Verbindung besteht, bei der es sich vorzugsweise um die Schweissverbindungen 6.1 und 6.2 handelt. Die Schweissverbindungen 6.1 und 6.2 zwischen dem Ringeinsatz 3 und dem Stator 1 werden vorzugsweise durch Laserstrahlschweissen hergestellt.

Weiterhin ist in Figur 2 gezeigt, dass der Ringeinsatz 3 eine Ausnehmung 10 aufweist. Im gezeigten Ausführungsbeispiel ist in die Ausnehmung 10 im Ringeinsatz 3 ein Einsatz 9 eingebracht.

Das Aufgussteil 4 weist ebenfalls eine Ausnehmung 13 auf. Diese ist in der Position identisch zu der Position der Ausnehmung 10 des Ringeinsatzes 3. Somit sind im gezeigten Ausführungsbeispiel die Ausnehmung 10 im Ringeinsatz 3, der Einsatz 9 im Ringeinsatz 3 und die Ausnehmung 13 im Aufgussteil 4 dazu geeignet, die Druckluft aus der Ringnut 7 in die Lagerfläche 14 zwischen dem Rotor 2 und dem Aufgussteil 4 zu leiten

Weiterhin ist in Figur 2 dargestellt, dass der Einsatz 9 auf der der Lagerfläche 14 des aerostatischen Lagers L zugewandten Seite eine Kontur aufweist, die einer Düse 8 entspricht. Durch die Düse 8 wird die Strömungsgeschwindigkeit der Druckluft erhöht, wodurch ein Zurückpuffern der Druckluft aus der Lagerfläche 14 des aerostatischen Lagers L in die Ausnehmung 10 des Ringeinsatzes 3 und die Ringnut 7 verhindert werden kann. In anderen Ausführungsbeispielen kann z.B. die Ausnehmung 13 im Aufgussteil 4 und/oder die Ausnehmung 10 im Ringeinsatz 3 die Kontur der Düse 8 aufweisen.

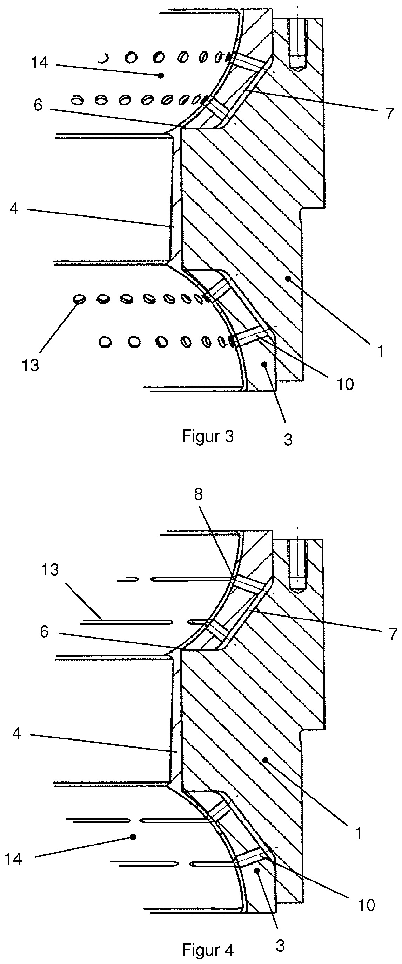

Die Figuren 3 und 4 zeigen eine weitere Ausführungsform des Stators 1, der Ringnut 7, des Ringeinsatzes 3 und des Aufgussteils 4. In Figur 3 ist dabei eine zweireihige Anordnung einer Vielzahl an Ausnehmungen 10 im Ringeinsatz 3 dargestellt. In diesem Ausführungsbeispiel handelt es sich bei den Ausnehmungen 10 um Bohrungen. Die Bohrungen können sowohl über eine spanende Methode als auch über Laserstrahlbohren hergestellt werden. Figur 4 zeigt eine Ausführungsform, in der die Ausnehmung 10 als ein Schlitzauslass ausgeformt ist. Die Ausnehmung 13 im Aufgussteil 4 ist in dem in Figur 4 gezeigten Beispiel als Schlitzdüse 8 ausgebildet.

Die Funktionsweise der vorliegenden Erfindung ist folgende und wird anhand Figur 1 erläutert:
In einem Ausführungsbeispiel wird über die Ausnehmungen 5.1 und 5.2 Druckluft mit einem Überdruck von etwa 5 bar aus einer nicht dargestellten Quelle in die Ringnut 7 eingeleitet. Über die Ringnut 7 wird die Druckluft über den gesamten Umfang des Stators 1 verteilt. Über die Ausnehmungen 10 im Ringeinsatz 3, den Einsatz 9 mit der Düsenkontur 8 auf der dem Rotor 2 zugewandten Seite und die Ausnehmung 13 im Aufgussteil 4 wird die Druckluft in die Lagerfläche 14 zwischen dem Rotor 2 und dem Aufgussteil 4 geleitet. Die Druckluft erzeugt anschliessend im Bereich der Lagerflächen 14 einen gleichmässigen Lagerspalt 14 zwischen dem Rotor 2 und dem Aufgussteil 4. Durch den durch die Druckluft erzeugten Lagerspalt 14 wird verhindert, dass sich der Rotor 2 und das Aufgussteil 4 berühren.

Durch die Nutzung von Druckluft als Schmierstoff handelt es sich bei dem Lager um das zuvor beschriebene aerostatisches Lager. Weiterhin entstehen durch die Nutzung der Druckluft als Schmierstoff nur sehr kleine Reibungskräfte. Dadurch sind hohe Drehzahlen des Rotors 2 bei einer gleichzeitig sehr hohen Genauigkeit des aerostatischen Lagers L möglich. Im gezeigten Ausführungsbeispiel nach Figur 1 wirkt das aerostatische Lager L sowohl gegen axial als auch gegen radial wirkende Kräfte gegenüber dem Rotor 2.

**Bezugszeichenliste**

| | | | | | |
|---|---|---|---|---|---|
| 1 | Stator | 34 | | L | aerostatisches Lager |
| 2 | Rotor | 35 | | | |
| 3 | Ringeinsatz | 36 | | | |
| 4 | Aufgussteil | 37 | | | |
| 5 | Ausnehmung | 38 | | | |
| 6 | Schweissstellen | 39 | | | |
| 7 | Ringnut | 40 | | | |
| 8 | Düse | 41 | | | |
| 9 | Einsatz | 42 | | | |
| 10 | Ausnehmung | 43 | | | |
| 11 | Verschluss | 44 | | | |
| 12 | Schraube | 45 | | | |
| 13 | Ausnehmung | 46 | | | |
| 14 | Lagerfläche/Lagerspalt | 47 | | | |
| 15 | Druckluftanschluss | 48 | | | |
| 16 | Ausnehmung | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Aerostatisches Luft- und/oder Gaslager mit zumindest einem Stator (1) und zumindest einem Rotor (2), wobei der Stator (1) zumindest eine Ausnehmung (5.1, 5.2) und eine Ringnut (7) aufweist, wobei die Ausnehmung (5.2, 5.2) eine Lagerfläche (14) des aerostatischen Lagers (L) und die Ringnut (7) des Stators (1) mit durch Druck beaufschlagter Luft und/oder mit durch Druck beaufschlagtem Gas versorgt, wobei die Ringnut (7) im Stator (1) umlaufend ist,
**dadurch gekennzeichnet,**
**dass** die Ringnut (7) im Bereich der Lagerfläche (14) angeordnet ist, wobei zwischen dem Stator (1) und dem Rotor (2) ein Aufgussteil (4) eingebracht ist, wobei die Lagerfläche (14) zwischen dem Aufgussteil (4) und Rotor (2) angeordnet ist und die Ringnut (7) im Stator (1) einen Ringeinsatz (3) umfasst, wobei der Ringeinsatz (3) mit dem Stator (1) stoffschlüssig verbunden ist, wobei die stoffschlüssige Verbindung eine Schweissverbindung (6, 6.1, 6.2) ist, wobei der Ringeinsatz (3) eine Ausnehmung (10) in Form einer Vielzahl von Düsen und/oder Mikrodüsen und/oder zumindest zwei Schlitzauslässe aufweist, und wobei das Aufgussteil (4) eine Ausnehmung (13) aufweist, wobei die Position der Ausnehmung (13) im Aufgussteil (4) mit der Position der Ausnehmung (10) im Ringeinsatz (3) übereinstimmt.

2. Aerostatisches Luft- und/oder Gaslager nach Anspruch 1, **dadurch gekennzeichnet, dass** die Ausnehmung (10) im Ringeinsatz (3) einen Einsatz (9) aufnimmt.

3. Aerostatisches Luft- und/oder Gaslager nach Anspruch 1, **dadurch gekennzeichnet, dass** die Ausnehmung (13) im Aufgussteil (4) und/oder der Einsatz (9) im Ringeinsatz (3) in Form einer Düse (8) ausgebildet sind.

4. Aerostatisches Luft- und/oder Gaslager nach einem der Ansprüche 1 bis 3, **dadurch gekennzeichnet, dass** die Ausnehmung (13) im Aufgussteil (4) und/oder der Einsatz (9) und/oder die Ausnehmung (10) im Ringeinsatz (3), die mit Druck beaufschlagte Luft und/oder das mit Druck beaufschlagte Gas in die Lagerfläche (14) zwischen dem Rotor (2) und dem Aufgussteil (4) leitet.

5. Aerostatisches Luft- und/oder Gaslager nach einem der Ansprüche 1 bis 4, **dadurch gekennzeichnet, dass** die Ausnehmung (5.1, 5.2), welche das aerostatische Lager (L) mit durch Druck beaufschlagter Luft und/oder das mit Druck beaufschlagte Gas zu versorgt, eine Bohrung ist.

6. Aerostatisches Lager nach einem der Ansprüche 1 bis 5, **dadurch gekennzeichnet, dass** die Ringnut (7) über einen einzigen Zugang, vorzugsweise über die Ausnehmung (5.1, 5.2), mit der mit Druck beaufschlagten Luft und/oder dem mit Druck beaufschlagten Gas versorgbar ist.

## Claims

1. Aerostatic air and/or gas bearing with at least one stator (1) and at least one rotor (2), wherein the stator (1) has at least one cutout (5.1, 5.2) and an annular groove (7), wherein the cutout (5.1, 5.2) supplies a bearing surface (14) of the aerostatic bearing (L) and the annular groove (7) of the stator (1) with pressurised air and/or with pressurised gas, wherein the annular groove (7) in the stator (1) is encircling,
**characterised**
**in that** the annular groove (7) is arranged in the region of the bearing surface (14), wherein an infusion part (4) is placed between the stator (1) and the rotor (2), wherein the bearing surface (14) is arranged between the infusion part (4) and rotor (2) and the annular groove (7) in the stator (1) comprises an annular insert (3), wherein the annular insert (3) is connected in a material-locking manner to the stator (1), wherein the material-locking connection is a welded connection (6, 6.1, 6.2), wherein the annular insert (3) has a cutout (10) in the form of a multiplicity of nozzles and/or micro-nozzles and/or at least two slotted outlets, and wherein the infusion part (4) has a cutout (13), wherein the position of the cutout (13) in the infusion part (4) corresponds to the position of the cutout (10) in the annular insert (3).

2. Aerostatic air and/or gas bearing according to claim 1, **characterised in that** the cutout (10) in the annular insert (3) receives an insert (9).

3. Aerostatic air and/or gas bearing according to claim 1, **characterised in that** the cutout (13) in the infusion part (4) and/or the insert (9) in the annular insert (3) are configured in the form of a nozzle (8).

4. Aerostatic air and/or gas bearing according to one of claims 1 to 3, **characterised in that** the cutout (13) in the infusion part (4) and/or the insert (9) and/or the cutout (10) in the annular insert (3) directs the pressurised air and/or the pressurised gas into the bearing surface (14) between the rotor (2) and the infusion part (4).

5. Aerostatic air and/or gas bearing according to one of claims 1 to 4, **characterised in that** the cutout (5.1, 5.2) which to supplies the aerostatic bearing (L) with pressurised air and/or with pressurised gas, is a bore.

6. Aerostatic bearing according to one of claims 1 to 5, **characterised in that** the annular groove (7) can be supplied with the pressurised air and/or the pressurised gas via a single access, preferably via the cutout (5.1, 5.2).

## Revendications

1. Palier à air et/ou à gaz aérostatique avec au moins un stator (1) et au moins un rotor (2), dans lequel le stator (1) présente au moins un évidement (5.1, 5.2) et une rainure annulaire (7), dans lequel l'évidement (5.1, 5.2) alimente une surface d'appui (14) du palier aérostatique (1) et la rainure annulaire (7) du stator (1) en air sous pression et/ou en gaz sous pression, dans lequel ladite rainure annulaire (7) dans le stator (1) est circonférentielle,
**caractérisé par le fait**
**que** la rainure annulaire (7) est disposée à l'endroit de la surface d'appui (14), entre le stator (1) et le rotor (2) étant placé un élément de perfusion (4), la surface d'appui (14) étant disposée entre l'élément de perfusion (4) et le rotor (2) et la rainure annulaire (7) dans le stator (1) comportant un insert annulaire (3), l'insert annulaire (3) est connecté de manière étanche aux poussières au stator (1), la connexion étanche aux poussières étant un joint soudé (6, 6.1, 6.2), l'insert annulaire (3) présentant un évidement (10) sous forme d'une pluralité de buses et/ou de micro-buses et/ou d'au moins deux sorties en forme de fente, et l'élément de perfusion (4) présentant un évidement (13), la position de l'évidement (13) dans l'élément de perfusion (4) coïncidant avec la position de l'évidement (10) dans l'insert annulaire (3).

2. Palier à air et/ou à gaz aérostatique selon la revendication 1, **caractérisé par le fait que** l'évidement (10) dans l'insert annulaire (3) reçoit un insert (9).

3. Palier à air et/ou à gaz aérostatique selon la revendication 1, **caractérisé par le fait que** l'évidement (13) dans l'élément de perfusion (4) et/ou l'insert (9) dans l'insert annulaire (3) sont réalisés sous forme d'une buse (8).

4. Palier à air et/ou à gaz aérostatique selon l'une des revendications 1 à 3, **caractérisé par le fait que** l'évidement (13) dans l'élément de perfusion (4) et/ou l'insert (9) et/ou l'évidement (10) dans l'insert annulaire (3) conduisent l'air sous pression et/ou le gaz sous pression dans la surface d'appui (14) entre le rotor (2) et l'élément de perfusion (4).

5. Palier à air et/ou à gaz aérostatique selon l'une des revendications 1 à 4, **caractérisé par le fait que** l'évidement (5.1, 5.2) qui alimente le palier aérostatique (L) en air sous pression et/ou en gaz sous pression est un alésage.

6. Palier aérostatique selon l'une des revendications 1 à 5, **caractérisé par le fait que** la rainure annulaire (7) peut être alimentée via un accès unique, de préférence via l'évidement (5.1, 5.2), en air sous pression et/ou en gaz sous pression.
